# EUROPEAN PATENT APPLICATION

(11) **EP 2 403 108 A1**
(43) Date of publication of application: **04.01.2012**
(21) Application number: 10167619.5
(22) Date of filing: 29.06.2010
(51) Int. Cl.: H02K 1/27, H02K 1/32, H02K 7/18

(54) **Wind turbine generator and method of assembly of a wind turbine generator**

(71) Applicant: Siemens Aktiengesellschaft, 80333 München (DE)
(72) Inventor: Kimiabeigi, Mohammad, 7330 Brande (DK)

(57) **Abstract**

The invention describes a generator for use in a wind turbine comprising a generator stator (210) and a generator rotor (400), the generator rotor (400) comprising a rotor yoke (402), and a plurality of magnets (406) disposed on said rotor yoke (402). The rotor yoke (402) comprises a plurality of cavities (408) disposed on a circumferential surface (401) of the rotor yoke (402) such that a position of each of said plurality of cavities (408) coincides with an area of essentially low magnetic flux density in the rotor yoke (402). The invention further comprises a method of assembling a generator. The method comprises at least the steps of assembling a generator stator with a generator rotor, wherein the generator rotor is outfitted at least with a rotor yoke, and a plurality of magnets are being disposed on the rotor yoke. Thereby a plurality of cavities (408) are formed in a circumferential surface (410) of the rotor yoke (402) such that a position of each of said plurality of cavities (408) coincides with an area of essentially low magnetic flux density in the rotor yoke (402). The invention further describes a wind turbine using the generator of the present invention.

## Description

The present invention describes a generator, more particularly, a light generator with improved cooling mechanisms. The invention further describes a method of assembling a wind turbine generator. The invention also describes a wind turbine that uses the wind turbine generator that constitutes the object of the present invention.

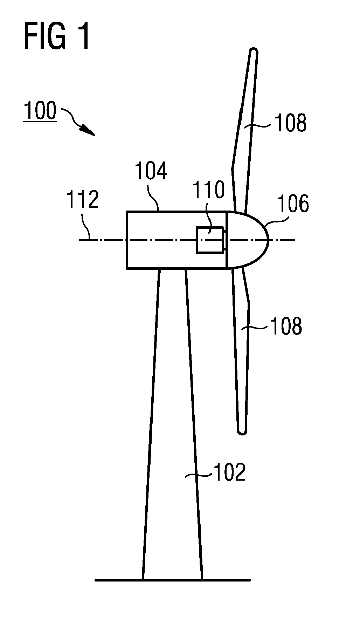

Wind turbines come in many sizes and configurations, and are built from a wide range of materials. In simple terms, a wind turbine consists of a rotor that has wing shaped blades attached to a hub, a nacelle that houses a drive train with or without a gearbox, connecting shafts, support bearings, the generator, plus other machinery, a tower, and ground mounted electrical equipment. The wing shaped blades on the rotor harvest the energy in the wind stream. The rotor converts the kinetic energy in the wind to rotational energy transmitted through the drive train to the generator. Generated electricity can be connected directly to the load or feed to the utility grid. Such a wind turbine will be described in further detail in the present document in connection with Figure 1.

The weight and cost of the turbine are key to making wind energy competitive with other power sources, because present day technologies have significantly improved the efficiency of the rotor and maximized the energy capture of the machine. The typical weight distribution between the primary components of a wind turbine contemplates that the tower is the heaviest part, followed by the nacelle with its internal components, followed by the rotor with the blades. In addition, there are foundations and conventional ground-mounted systems, including transformers, switching and other power equipment.

There are several areas where technological progress and cost reduction are needed. Turbine subsystem costs are generally evenly split between rotor, nacelle, drive train power systems, and the tower. There is no single component that dominates turbine cost. The rotor is the highest cost item on most machines and must be the most reliable. Towers are normally the heaviest component and could benefit from weight reduction, but lightening the rotor or tower-top weight has a multiplier effect throughout the system including the foundation.

Efforts to reduce the weight of the tower top components have up until now focused on attempting to use light weight materials and to provide designs that attempt to eliminate altogether certain components of the wind turbine, such as the gear box. Further progress is needed to be made in the area of weight reduction of the tower top components of a wind turbine, especially when it is not feasible to use certain light materials or in the fixed speed generators.

The tower top components of the wind turbine need to be cooled, especially the electrical generators. Air-to-air or water-to-air heat exchangers have been employed to dissipate the heat from the generators housed within the nacelle. In some known systems, the gearbox and generator have their own separate heat exchangers. For example, in one known system a gearbox heat exchanger includes a fan, ductwork, and an oil-to-air heat exchanger. The generator heat exchanger includes another fan, additional ductwork and an air-to-air heat exchanger. Air for both separate heat exchangers is typically drawn from the air within the nacelle. During the operation of the wind turbine, many components generate heat and the temperature of the air within the nacelle can be elevated with respect to the outside ambient air. This can result in inefficiencies in the cooling system by using warmed air to cool hot components.

As mentioned, the current cooling solutions involve the use of multiple additional components in the nacelle that ultimately all lead to increasing the weight of the tower top components of the wind turbine. Therefore, the present solutions to the problem of providing efficient cooling of the components within the nacelle all go counter to the efforts of reducing the weight of the tower top components of the wind turbine. Alternative solutions are needed for cooling the rotating elements of the wind the turbine and that do not place an additional weight burden onto the tower top.

It is therefore an object of the present invention to provide a generator which is lighter and which exhibits improved cooling properties, while maintaining its overall efficiency.

The object of the invention is achieved by the generator of claim 1, by the method of assembling a generator rotor of claim 13, and by the wind turbine comprising the generator of the present invention, according to claim 14.

The generator of the present invention, for use in a wind turbine, comprises at least a generator stator and a generator rotor. The generator rotor comprises at least a rotor yoke, and a plurality of magnets disposed on the rotor yoke. The circumferential surface of the rotor yoke has a plurality of cavities formed in the rotor yoke such that a position of each of said plurality of cavities coincides with an area of essentially low magnetic flux density in the rotor yoke. In other words, the cavities are positioned at areas of the rotor yoke in which the magnetic flux density would also be essentially low if the cavities were not present in the rotor yoke, e.g. in a rotor yoke according to prior art. The term 'essentially low magnetic flux density in the rotor yoke' is understood to mean a value which is insignificant compared to the overall flux through the rotor yoke, for example a flux between 0.0 T and 1.2 T.

The favourable presence of a plurality of cavities on the circumferential surface of the rotor yoke in the generator of the present invention allows a reduction in the overall weight of the inventive generator, leads to improved generator cooling by increasing the contact surface area in the rotor yoke, and to an improved aerodynamic geometry of the rotor yoke. For generators with a high number of poles, it as observed that the presence of the cavities in the rotor yoke, in accordance with the embodiments proposed by the present invention, leads to a reduction of up to 5% of the overall generator weight, without any detrimental effect on the performance of the generator.

The invention is, in particular, suitable for direct drive wind turbine generators which are usually very large (with a rotor diameter of several meters) and heavy constructions. Here, due to the weight of the generator components, the transportation and mounting of the wind turbine generator components amounts to approximately 40% of the total costs of a wind turbine. Since the generator proposed by the present invention is lighter, the costs of transporting the generator and lifting the generator into place are reduced. Further, since the circumferential surface of the rotor yoke is formed with less material to create the plurality of cavities, either by mould casting the rotor yoke or by removing material from the rotor yoke, less ferromagnetic material is required for the manufacture of the generator. Due to the absence of, or removal of, portions of the circumferential surface of the rotor yoke to create the plurality of cavities, a larger surface of the rotor yoke is exposed and may assist in cooling. This results in improved cooling performance for the rotor yoke and for the generator in general.

In accordance with the method of the present invention, a generator is assembled. The method comprises assembling a generator stator with a generator rotor, wherein the generator rotor comprises a rotor yoke, and a plurality of magnets disposed on the rotor yoke. The method further comprises forming a plurality of cavities on a circumferential surface of the rotor yoke. The plurality of cavities are arranged in the rotor yoke such that a position of each of said plurality of cavities coincides with an area of essentially low magnetic flux density in the rotor yoke.

In the present document the terms such as "formed", "excised" are used interchangeably and refer to the operation of removing a portion of ferromagnetic material from the rotor yoke and creating a cavity in the rotor yoke, as it will be further explained in detail in connection with the various embodiments of the present invention. The cavities may be formed in the rotor yoke by mould casting or they may be formed by removing or excising material from certain locations on a circumferential surface of the rotor yoke by any suitable processknown to a person skilled in the art, for example by milling.

According to the present invention, such generators are used in the assembly of a wind turbine generator, preferably a direct drive generator (without any gearbox between the hub and the generator).

Particularly advantageous embodiments and features of the invention are given by the dependent claims, as revealed in the following description.

The generator according to the present invention exhibits a number of cavities disposed in the external or internal circumferential surface of the rotor yoke, and wherein the number of cavities coincides with the number of magnets disposed about the rotor yoke. Whether the cavities are on the external or internal circumferential surface of the rotor yoke depends on the type of the generator. If the generator is of a preferred type with an inner stator and an outer rotor, as is usually the case for direct drive wind turbine generators, the magnets are arranged on the internal surface, vis-à-vis the stator, and the cavities are arranged on the external circumferential surface. If the generator is of a type with an inner rotor and outer stator, the magnets are arranged at the external surface vis-à-vis the stator, and the cavities are disposed about the internal circumferential surface accordingly.

A cavity is preferably formed in the rotor yoke for each magnet disposed on the rotor. As it will be explained in detail below, the flux density in the rotor yoke behind the magnet is negligible and therefore does not contribute to the electromagnetic torque. Therefore, forming a cavity in this area, e.g. either by mould casting or by removing the ferromagnetic material used in this region, will not affect the overall performance of the generator, and the hollow region thus created may be beneficial for other purposes, such as cooling.

Since the magnets are disposed on a circumferential surface of the rotor yoke essentially equidistant from each other, and a cavity is preferably formed in the rotor yoke for each magnet, the cavities are also arranged essentially equidistantly about the rotor yoke.

Preferably, the cross-section of the cavities have one of the following shapes: concave, semicircular, triangular, trapezoidal, rectangular, or a combination thereof. A person skilled in the art will choose a cavity shape based on the desired manufacturing cost savings and the desired contribution to the cooling improvement. The larger the surface of the cavity exposed to the coolant, the better the heat transfer coefficient, and thereby improved cooling is achieved.

Each cavity of said plurality of cavities is preferably disposed on the opposite side of the rotor yoke to one of said plurality of magnets, i.e. a cavity and a corresponding magnet are arranged on either side of the rotor yoke along a virtual radial line extending through the magnet, such that the cavity faces away from this magnet.

In such way, a position of each one cavity of the plurality of cavities coincides with an area of low magnetic flux density in the rotor yoke. As it will be described in detail further in the present document, the absence of ferromagnetic material in areas of low flux density in the rotor yoke (i.e. the cavities) does not detract from the overall magnetic field distribution or from the generator efficiency.

A number of auxiliary devices may be mounted upon the external circumferential surface of the rotor yoke via the plurality of cavities. In one embodiment of the present invention an auxiliary device may be a cooling device. The cooling device may preferably comprise a heat sink, one or more air pipes, one or more liquid pipes, or a combination thereof. Additional heat sinks with large surface area may be affixed in the cavities with only minor modifications. As a result, the heat transfer coefficient and the cooling efficiency can easily be increased. Pipes may also be affixed, both for liquid or air forced cooling. Should no additional auxiliary devices be mounted in the cavities, the cavities still have the ability to improve the passive cooling and increase the turbulence of the flow of the coolant, such as the ambient air, and thereby increase the efficiency of cooling the outside of the generator.

The cavities are preferably blind cavities, whereby the term "blind" is to be understood to mean that the cavities are not through cavities, i.e. they do not comprise holes in the rotor yoke, but only extend to a certain depth into the rotor yoke. A thickness of the rotor yoke in a region defined between the circumferential surface of the rotor yoke and a convex surface of the cavity is preferably above a bending limit.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine;
Figure 2 illustrates a sectional view of a generator rotor arrangement, as known from the prior art;
Figure 3 shows an enlargement of a segment of a drive generator, as known from the prior art;
Figure 4 illustrates a sectional view of a generator rotor arrangement, in accordance with an embodiment of the present invention;
Figure 5 shows an enlargement of a segment of a drive generator, in accordance with an embodiment of the present invention;
Figure 6 illustrates a further sectional view of a generator rotor arrangement, in accordance with another embodiment of the present invention;
Figure 7 illustrates a further yet sectional view of a generator rotor arrangement, in accordance with another embodiment of the present invention;
Figure 8 illustrates an image of the flux density and the distribution of the magnetic field within a generator rotor arrangement as known from the prior art;
Figure 9 illustrates the flux density amplitude and magnetic field lines within a generator rotor arrangement as known from the prior art;
Figure 10 illustrates an image of the flux density and the distribution of the magnetic field within a generator rotor arrangement in accordance with an embodiment of the present invention;
Figure 11 illustrates the flux density amplitude and magnetic field lines within a generator rotor arrangement in accordance with an embodiment of the present invention; and
Figure 12 illustrates a flow chart representation of the method of assembly of a generator, in accordance with the present invention.

In the drawings, like reference numbers refer to like objects throughout. Objects in the diagrams are not necessarily drawn to scale.

Figure 1 shows a wind turbine 100 comprising a tower 102 that may be erected on firm ground, on a seabed, or on any other suitable support. The wind turbine 102 comprises a wind turbine nacelle 104 and a hub 106 with rotor blades 108. As schematically indicated in Figure 1, a generator 110, which may be a direct drive generator 110, is arranged in the wind turbine nacelle 104 preferably between the hub 106 and the tower 102. Other generators different from a direct drive generator may be envisioned to be used, as it will be readily apparent to a person skilled in the art, and the reference above to a direct drive generator has been made only for exemplary purposes.

The direct drive generator 110 comprises a generator rotor arrangement (not illustrated in the figure) connected to the hub 106 and a generator stator arrangement (not illustrated in the figure) comprising for example a ring shaped stator. The direct drive generator 110 has a substantially horizontally aligned centre axis A denoted with 112 in Figure 1. The generator 110 of the exemplary wind turbine 100 may comprise either an internal or an external rotor, and as is shown in the configuration illustrated in Fig. 1 is only in an exemplary embodiment employed to clarify the various aspects of the present invention. However, most direct drive generators for wind turbines of the new generation are generators with an outer rotor. Therefore, in the following figures such generator types are shown as the preferred example, which should not exclude the use of the invention with other generator types.

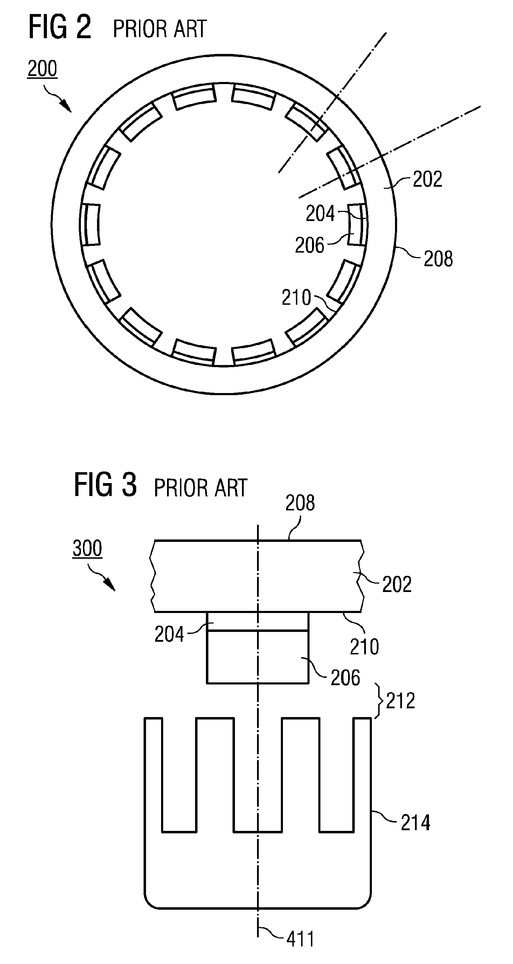

Figure 2 illustrates a sectional view of a generator rotor arrangement 200, as known from the prior art. As shown in this view, a rotor yoke 202 having a cylindrical shape has on its inner circumferential surface 210 affixed via base plate(s) 204 a plurality of magnets 206. As it will be know to a person skilled in the art, in alternative configurations for a generator with an inner rotor and outer stator said plurality of magnets may be affixed on to the external circumferential surface 208 of said rotor yoke. In the exemplary embodiment represented in Fig. 2 the external circumferential surface 208 of the rotor yoke is envisioned to be free of additions or notches. As it will be readily apparent for a person skilled in the art, the generator rotor arrangement of Figure 2 may be comprised for example in a drive generator 110 of a wind turbine 100. As know in the art, such a generator comprises both a generator rotor and a generator stator structure, wherein a generator stator has a core fixed to the inside of a motor housing, engaged with said housing. The motor housing exemplarily has the form of a cylinder that is closed on both ends. The generator stator may have a structure in which a plurality of teeth are protruding to the inside from an inner peripheral surface of a cylindrical body and electromagnetic coils are respectively wound around each of these teeth. The structure discussed above for the generator stator is not meant to be limiting for the exact configuration of the generator stator and is provided here only for exemplary purposes. Further, none of the constructional details of the generator stator are provided in Figure 2.

The generator rotor may have a structure in which a plurality of segment magnets 206, illustrated in Figure 2 as a sectional view, are fastened to the interior circumferential surface 210 of the rotor yoke 202, and which faces an outer peripheral surface of an inner stator (not shown in Figure 2) bearing the electromagnetic coils. As shown in Figure 2, the segment magnets 206 may form plates extending in the axial direction of the rotor yoke 202 and are provided with a base plate 204 that affixes the magnets 206 to the curved interior circumferential surface 210 of rotor yoke 202.

The rotor yoke 202 is formed of a ferromagnetic magnetic material such as iron or the like, so as to be good conductor of magnetic flux.

Illustrated in Figure 3, that shows an enlargement of a segment 300 of the drive generator 110, as known from the prior art is a one pole view of a rotor of a permanent motor generator. As discussed above, pertaining to the generator rotor, illustrated are a section view of a rotor yoke 202 with its elements, and a section view of a magnet 206 affixed to the rotor yoke via a base plate 204. The magnet 206 is preferably a permanent magnet, such as a high energy product magnet including NdFeB. Other types of magnets could also be used, such as ceramic or samarium cobalt, with either reduced flux density or increased temperature capability. The magnets 206 drive magnetic flux across a magnetic air gap 212. The generator rotor is separated from the generator stator 210 via an air gap 212. Figure 3 shows a virtual radial axis 216 extending through the centre of the magnet 206 of the rotor segment 300 as a symmetry axis 206 of the magnet 206.

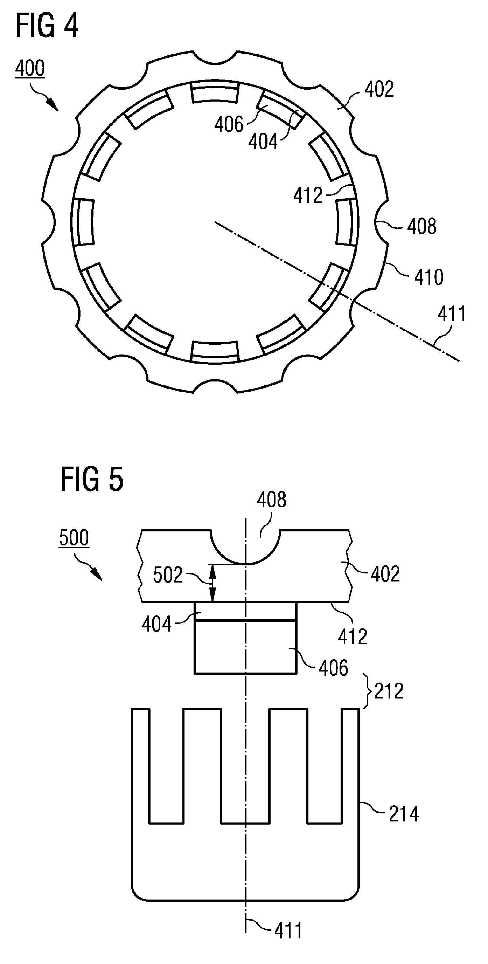

Figure 4 illustrates a sectional view of a generator rotor arrangement 400, in accordance with an embodiment of the present invention.

The generator rotor arrangement 400 shown in Figure 4 is similar to the generator rotor arrangement 200 of Figure 2, with the distinction that a plurality of cavities 408 have been formed into the external circumferential surface of the rotor yoke 402. Corresponding to each magnet 406, on the external circumferential surface 410 of the rotor yoke 402 a cavity 408 is provided. There is at least a one to one correspondence between the number of cavities incised in the rotor yoke and the number of magnets disposed on the internal circumferential surface of the rotor yoke. A symmetry axis 411 of each magnet, extending through the magnet 406 from the internal circumferential surface 412 of the rotor yoke 402 in a radial direction constitutes as well the symmetry axis versus which the exact position of the cavity in the rotor yoke is preferably defined. Specifically, should a shape of the cavity be exemplarily considered semi-circular, the diameter of the cavity coincides with the radial direction of the symmetry axis of the rotor yoke.

The cavities are arranged in an equidistant arrangement. The cavities may have various shapes, chosen by a designer skilled in the art based on the desired specification. For example, a cavity may be concave, may be semi-circular, triangular, trapezoidal, rectangular or a combination thereof, when viewed in section view. The plurality of cavities illustrated by Figure 4 are shown for exemplary purposes of semi-circular shape, but as mentioned above, other shapes may be envisioned. Further, although in the above figures said plurality of cavities are shown disposed on an external circumferential surface of the rotor yoke, the plurality of cavities may also be formed on an internal circumferential surface of the rotor yoke in a generator arrangement with an inner rotor and outer stator.

Figure 5 shows an enlargement of a segment 500 of a drive generator, in accordance with an embodiment of the present invention.

The pole view of a rotor of a permanent motor generator of Figure 3, is illustrated in Figure 5 with the distinction that a cavity 408 is illustrated as formed in the external circumferential surface 410 of the rotor yoke 402. Cavity 408 is a hollow cavity and it is a blind cavity whose maximum depth in the rotor yoke 402 is limited. The thickness of a region 502 of the rotor yoke 402 defined between the internal circumferential surface 412 of the rotor yoke 402 and a convex surface of a cavity 408 always exceeds the bending limit of said region.

The rotor yoke is envisioned to be manufactured of a "soft" magnetic material comprising a mixture of iron, cobalt and nickel with a high relative permeability. Therefore, whenever it has a choice, the magnetic flux generated by the plurality of magnets 406 prefers to flow through the ferromagnetic material of the rotor yoke rather than through the air gap 212.

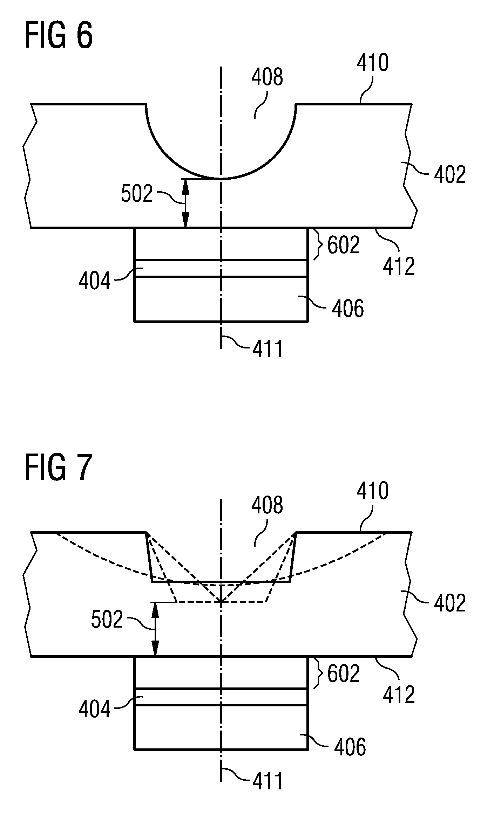

In the event that a large quantity of ferromagnetic material is absent from the external circumferential surface of the rotor yoke due to forming the plurality of cavities, an embodiment of the present invention provides a solution. Specifically, the embodiment of the present invention illustrated in Figure 6 shows a rotor yoke in which the thin region 502 is augmented. As the diagram shows, region 502 is reinforced by adding more material to the rotor yoke in this region. This is achieved by decreasing the thickness of the magnet base plate such that the outer radius of the magnet, its total weight and the amount of material used remain unchanged.

Specifically, the embodiment of the present invention illustrated in Figure 6 differs from the embodiment of the present invention illustrated in Figure 5 in the following aspects: the internal circumferential surface of the rotor yoke 412 is a continual surface on which the base plate 404 is adhered to facilitate the attachment of the permanent magnet 406. Upon forming cavity 408 a distance between the deepest point of cavity and the internal circumferential surface of the rotor yoke 412 is designated with 502. As it may be observed in Figure 6 the internal circumferential surface of the rotor yoke is no longer a continual surface, but is formed by a portion with the same shape as surface 412 and a rectangular protuberance 602. Said protuberance has been formed by thinning the thickness of base plate 404 versus its thickness in the embodiment of the invention shown in Fig. 5, such that the outer radius of the magnet, its total weight and the amount of material used remain unchanged. This is possible to be achieved since the rotor yoke and the base place most of the time are formed from the same material. Therefore the thinned region of the rotor yoke disposed bellow the cavity may be reinforced with material from the base plate so that its thickness does not decrease below a certain limit. As discussed above, the thickness of the rotor yoke should not be less than a minimal value otherwise the rotor yoke can be bent or broken due to vibrations and forces.

The thickness of the base-plate depends on how the designer decides to fixate the magnets. It can be up to 40% of the rotor yoke thickness but this value is an exemplary limit, it is just a typical value. The increase of the thickness of the rotor yoke with material from the base plate does not affect the field distribution since the magnet base-plate and rotor yoke conveniently elected to be made of magnetically the same material.

As it may be observed from Figure 7, the shape of the cavity 408 may have a regular cross sectional shape such as concave, semi-circular, triangular, trapezoidal, rectangular, or a combination thereof. The choice for a convenient shape of cavity is delegated to the designer of the generator who by way of thermal simulation would choose the shape most convenient in view of the cooling to be achieved. Generally, the larger the surface of the cavity exposed to the coolant (or air), the better the heat transfer coefficient, and thereby better cooling can be achieved.

The plurality of cavities, irrespective of shape, provide a structured surface grip which can be used for mounting auxiliary devices onto the rotor yoke, for example in order to improve the cooling performance.

Examples of such auxiliary devices that may be mounted into the rotor yoke cavities comprise cooling devices. Said cooling devices may be additional heat sinks with large surface area that may fixed in the cavities with only minor modifications. The presence of the heat sinks allow an increase of the heat transfer coefficient and therefore also the cooling efficiency. Other devices that may be mountable in the cavities are pipes for liquid or air forced cooling. However, the best use of the cavities for cooling the generator is without the extra auxiliary devices in the cavities, as these cavities have the potential to improve the passive cooling (without extra pipes) and increase the turbulence of the flow of the coolant (for example, ambient air) and thereby increase the efficiency of cooling the outside of the generator.

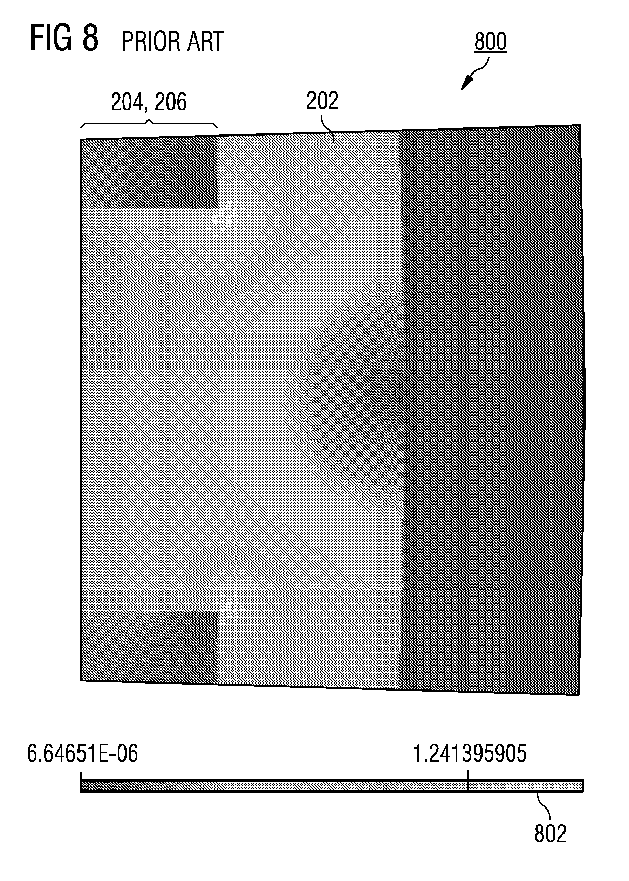

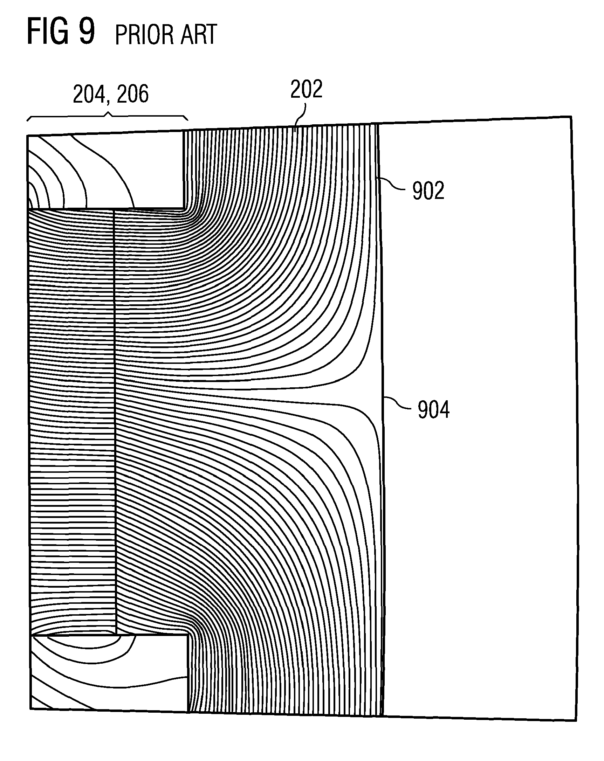

Figure 8 illustrates an image of the flux density and the distribution of the magnetic field within a generator rotor arrangement as known from the prior art, and Figure 9 illustrates the flux density amplitude and magnetic field lines within a generator rotor arrangement as known from the prior art. The figures show one pole of a generator with high number of poles. The amplitude of flux density and the field lines distribution within the rotor yoke 202 and the region of the base plate and magnet 204 and 206 are displayed in a rotor yoke, with a configuration as known in the art. From Figure 8, it may be inferred that the flux density in the rotor yoke, behind the magnet, is negligible and therefore does not contribute to the electromagnetic torque. This is an area of essentially low magnetic flux density in the rotor yoke.

The images shown in Figures 8 and 9 are a representation of the flux density distribution in a black and white rendering of a colour image, and the illustrated "magnetic flux lines" 902 show the magnetic flux. The field distribution images have been obtained via a Finite Element Method 2-dimensional tool (FEM 2D) but any tool suitable for fine-tuning designs may be used. In the Figure 8, the dark areas illustrate essentially very low or zero flux density and the light areas illustrate about 1.2 T flux density, according to the colour value indicator 802 included below the Figure 8. The solid black in Figure 8 represents the area outside the rotor yoke material.

The idea is simply to remove the ferromagnetic material used in this region 904 with low flux density, either by premoulding the rotor yoke or by excising the cavities and utilizing the ensuing hollow region for other purposes such as cooling. This will benefit from the fact that the external surface of the machine is larger compared to non-bifurcated rotor yokes, so that better cooling is achieved. Furthermore, passive cooling can be more efficient due to this extra surface and the aerodynamic shape of cavity.

The external surface increase will depend on the cavity shape. For example, for the semi-circular cross-sectional shape shown in Figure 5, the ratio gives about 30% increase in the external surface of the rotor.

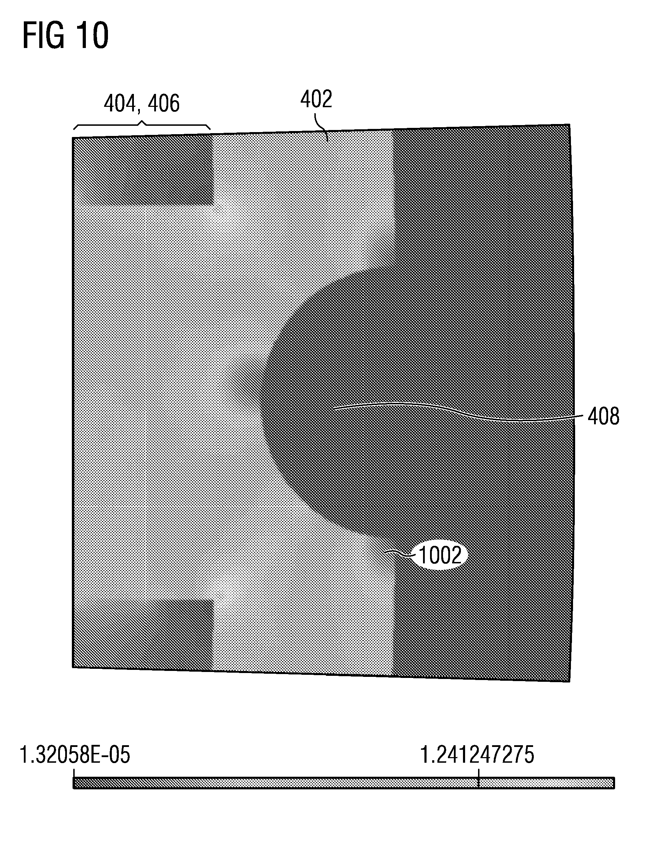

The image shown in Figure 10 is a black and white rendering of a colour image, similar to the illustration in Figure 8, of the flux density distribution in part of a rotor yoke in accordance with an embodiment of the present invention. As discussed above, it was realized via the analysis illustrated in Figures 8 and 9 that the flux density in the rotor yoke behind the magnet is negligible and therefore does not contribute to the electromagnetic torque. It was concluded therefore that the ferromagnetic material used in this region may be removed without detracting from the performance of the generator, and the ensuing hollow region may be used for other purposes, for example for cooling. As a result of removing the ferromagnetic material from said specific regions and creating therefore a plurality of cavities in the external circumferential surface of the rotor yoke 402, the external circumferential surface of the rotor yoke becomes larger as compared to the rotor yokes of the prior art, such illustrated in Figures 2 and 3, which do not have any cavities in their external circumferential surface. Since the external circumferential surface of the rotor yoke becomes larger, better cooling is achieved. Furthermore, passive cooling of the rotor yoke and implicitly of the generator is more efficient due to this additional external surface area so created, and due to an aerodynamic shape of cavity. As discussed above, at least in connection with Figure 7 in section view, the cavities may have one of the following shapes: concave, semicircular, triangular, trapezoidal, rectangular, or a combination thereof. Should for example the shape of the cavities excised in the external circumferential surface of the rotor yoke be a semicircle, it was observed that the increase of the external surface is three-fold. Therefore, it may be inferred that the cooling is also increased by a ratio of 3.

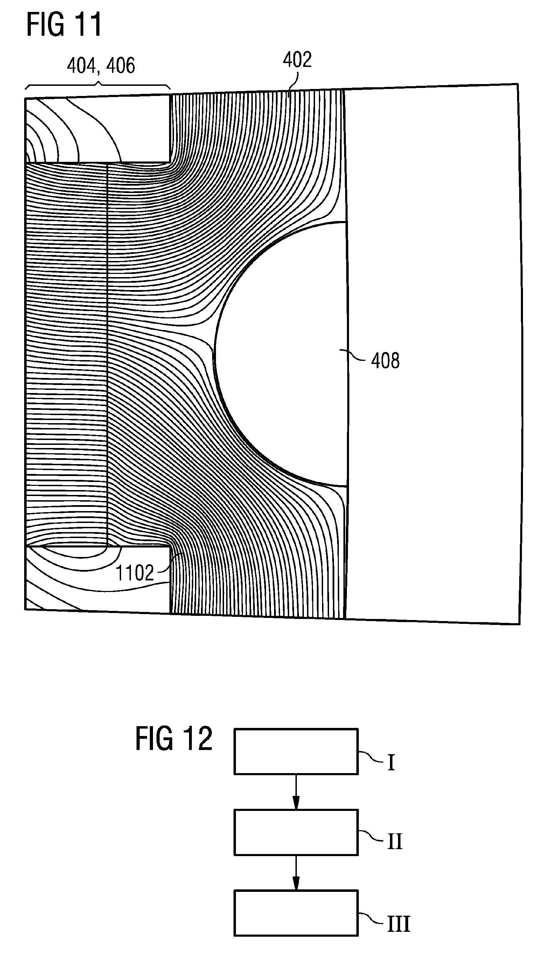

The image shown in Figure 11 is a representation of the magnetic flux lines, each line showing the magnetic flux, , in a rotor yoke where a cavity has been incised in the external circumferential surface of the rotor yoke.

Figures 9 and 11 illustrates how the magnetic flux lines bend while they leave one magnet pole (this magnet pole is shown in the figures) and enter the opposite neighboring magnet poles (the neighboring poles are not shown in the figures). The provided cavity increases the bending of these flux lines but does not block their path, further it does not increase the magnetic reluctance of their path. Magnetic reluctance has an inverse proportion to the flux density and torque.

As it may be observed in Figure 11, no significant change in the flux density is noticed as a result of removing a portion of the ferromagnetic material and creating a cavity in the external surface of the rotor yoke 402. A person skilled in the art, using for example finite element 2D analysis may calculate the electromagnetic torque both for the rotor yokes of the prior art and for the rotor yokes described in connection with the various embodiments of the present invention. The results of the calculation indicate for both cases the same field averages and the same cogging torque amplitude.

As it may be observed from a comparison between the field distribution illustrated in Figures 9 and 11, the flux densities in the rotor yoke are not increased significantly from the case of a rotor yoke without cavities in its external circumferential surface to the case of a rotor yoke with a plurality of cavities incised in its external circumferential surface. It may be further observed that the torque remains essentially the same.

Although Figure 11 shows areas of no magnetic field lines 1102, the absence of flux density in those areas is not linked to reduced generator performance. The torque and implicitly the performance of the generator would be reduced only is these areas or alike were showing very high flux densities which would then cause magnetic saturation and lower the output torque.

The numerals indicated on Figures 9 and 11 show the flux density magnitude in Tesla, and are provided herewith for exemplary purposes only and to only illustrate that flux lines distribution and to indicate the flow path of the magnetic flux flowing through the rotor yoke and how the flow is bent.

The removal of ferromagnetic material from one area that is not contributing to the electromagnetic torque does not have negative effects on the overall performance of the generator. From the point of view of electromagnetic design the removal only reduces the torque if the flux density increases to a high value after removal and thereby the ferromagnetic material, here the rotor yoke, becomes heavily saturated so that it can not accept flux as good as before by say the permeability of the rotor yoke is decreased. From mechanical point of view, as long as the yoke thickness is above a certain limit, there would be no risk of bending or breaking.

As discussed above, a finite element in 2-D method has been utilized to compute the electromagnetic torque. The calculation was employed to quantitatively verify what may as well be recognized from the flux density distribution illustrated in Figure 9 (before removal of ferromagnetic material and forming a cavity) and after removal of a ferromagnetic material and forming a cavity. Comparison of torque before and after removal simply showed no difference in electromagnetic torque waveform, both average torque and the harmonic components remained similar. From the standpoint of the torque, the removal of ferromagnetic material does not result is a significant saturation in the rotor yoke.

As it will be known for the person skilled in the art of generators, the cogging torque is an unwanted torque component that is due to the attraction of stator teeth by the magnets. Said unwanted torque causes vibrations and noise. Therefore it is always desirable to reduce the cogging torque in the generators. Although the removal of ferromagnetic material from the external circumferential surface of the rotor yoke does not necessarily aims or leads to a reduction of the cogging torque, it was observed that cogging torque is not increased due to removal of parts of the rotor yoke.

Figure 12 illustrates a flow chart representation of a possible method of assembly of a generator, in accordance with the present invention. The method comprises at least the steps I of forming in a surface of a rotor yoke a plurality of cavities, fitting II a generator rotor with this rotor yoke, and assembling III a generator stator with this generator rotor. The plurality of cavities are formed in the rotor yoke such that a position of each of cavity coincides with an area of essentially low magnetic flux density in the rotor yoke.

The generator according to the present invention described in detail above in connection with Figures 4 to 11 is used in the assembly of a wind turbine generator. The wind turbine generator in accordance with the present invention comprises a generator, the generator comprising a generator stator and a generator rotor, wherein the generator rotor comprises a rotor yoke, and a plurality of magnets disposed on said rotor yoke, and is characterized in that a circumferential surface of the rotor yoke has a plurality of cavities, and the plurality of cavities are formed in said rotor yoke. A position of each of said plurality of cavities coincides with an area of essentially low magnetic flux density in the rotor yoke.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" through this application does not exclude a plurality, and "comprising: does not exclude other steps or elements. A " unit", or "module" can comprise a number of units or modules, unless otherwise stated.

## Claims

1. A generator, comprising a generator stator (210) and a generator rotor (400),
wherein the generator rotor (400) comprises a rotor yoke (402), and a plurality of magnets (406) disposed on said rotor yoke (402),
whereby the rotor yoke (402) comprises a plurality of cavities (408) disposed on a circumferential surface (410, 412) of the rotor yoke such that a position of each of said plurality of cavities (408) coincides with an area of essentially low magnetic flux density in the rotor yoke (402).

2. A generator according to claim 1, wherein the cavities (408) are disposed on an external circumferential surface (410) of said rotor yoke (402).

3. A generator according to claim 1, wherein the cavities (408) are disposed on an internal circumferential surface of said rotor yoke (402).

4. A generator according to any of the preceding claims, wherein the number of the cavities (408) coincides with a number of magnets (406) of said plurality of magnets (406) disposed on said rotor yoke (402).

5. A generator according to any of the preceding claims, wherein each of the cavities (408) is disposed on the opposite side of the rotor yoke (402) to one of said plurality of magnets (406).

6. A generator according to any of the preceding claims, wherein said essentially low magnetic flux density in the rotor yoke (402) comprises a value between 0 T and 1.2 T.

7. A generator according to any of the preceding claims, comprising essentially equal distances between adjacent cavities (408).

8. A generator according to any of the preceding claims, wherein a cavity cross-sectional shape comprises one of, or a combination of, the following shapes: concave, semicircular, triangular, trapezoidal, rectangular.

9. A generator according to any of the preceding claims, comprising a number of auxiliary devices mounted upon the circumferential surface of the rotor yoke (402) via the plurality of cavities (408).

10. A generator according to claim 9, wherein an auxiliary device comprises a cooling device.

11. A generator according to any of the preceding claims, wherein said cavities (408) are blind cavities (408).

12. A generator according to any of the preceding claims, wherein the rotor yoke (402) is realized such that a thickness of the rotor yoke (402) in a region between the circumferential surface of a rotor yoke (402) and a convex surface of a cavity (408) exceeds a bending limit.

13. A method for assembling a generator, comprising a step of assembling a generator stator (210) with a generator rotor (400), which generator rotor (400) comprises a rotor yoke (402), and a plurality of magnets (406) disposed on said rotor yoke (402),
whereby a plurality of cavities (408) are formed in a circumferential surface (410, 412) of the rotor yoke (402) such that a position of each of said plurality of cavities (408) coincides with an area of essentially low magnetic flux density in the rotor yoke (402).

14. A wind turbine comprising a generator according to any of the claims 1 to 12.
